# EUROPEAN PATENT APPLICATION

(11) **EP 3 904 550 A1**
(43) Date of publication of application: **03.11.2021**
(21) Application number: 20171764.2
(22) Date of filing: 28.04.2020
(51) Int. Cl.: C22C 21/00, B23K 35/02, B23K 35/28, B32B 15/01, C22C 21/02, C22C 21/10, C22F 1/04, F28F 21/08

(54) **ALUMINIUM ALLOY SHEET MATERIAL AND HEAT EXCHANGER INCORPORATING SUCH AN ALUMINIUM ALLOY SHEET MATERIAL**

(71) Applicant: Aleris Rolled Products Germany GmbH, 56070 Koblenz (DE)
(72) Inventor: RITZ,, Fabian, 56070 Koblenz (DE); JACOBY,, Bernd, 56070 Koblenz (DE); SMEYERS,, Axel Alexander Maria, 2220 Heist-op-den-Berg (BE); KIRKHAM,, Steven, 56070 Koblenz (DE)
(74) Representative: Dey, Michael

(57) **Abstract**

The invention relates to a brazed heat exchanger comprises at least one header or manifold tube structured to hold a coolant; said header including a plurality of apertures; a plurality of substantially parallel fluid-carrying tubes each extending substantially perpendicular from one of said plurality of apertures in said header plate and structured to receive said coolant therethrough; and a plurality of corrugated aluminium alloy fins being in thermal communication with said plurality of fluid-carrying tubes and structured to transfer heat away therefrom, in order to cool said coolant as it circulates therein, and wherein said header is being made from the aluminium alloy sheet material comprising of, in wt.%: Mn 1.4%-1.8%, preferably 1.5%-1.8%; Si up to 0.7%; Fe up to 0.7%; Mg up to 0.30%; Cu up to 0.10%; Cr up to 0.25%; Zr up to 0.25%; Zn up to 0.50%; Ti up to 0.2%; balance aluminium and inevitable impurities.

## Description

### FIELD OF THE INVENTION

The invention relates to an Al-Mn alloy, also known as a 3XXX-series aluminium alloy, sheet material suitable for use in a heat exchanger. The invention further relates to the use of the Al-Mn alloy sheet material in a heat exchanger. Furthermore, the invention relates to a heat exchanger incorporating a component made from the Al-Mn alloy sheet material. In addition, the invention relates to a method of manufacturing an Al-Mn alloy sheet material suitable for use in a heat exchanger.

### BACKGROUND TO THE INVENTION

Substrates of aluminium or aluminium alloy in the form of sheet or extrusion, are used to make shaped or formed products. In some of these processes parts of (shaped) aluminium comprising substrates are interconnected. One end of a substrate may be interconnected with the other end or one substrate may be assembled with one or more other substrates. This is commonly done by brazing. In a brazing process, a brazing filler metal or brazing alloy or a composition producing a brazing alloy upon heating is applied to at least one portion of the substrate to be brazed. After the substrate parts are assembled, they are heated until the brazing filler metal or brazing alloy melts. The melting point of the brazing material is lower than the melting point of the aluminium substrate or aluminium core sheet.

Brazing sheet products find wide applications in heat exchangers and other similar equipment. Conventional brazing products have a core of rolled sheet, typically, but not exclusively an aluminium alloy of the 3xxx-series, having on at least one surface of the core sheet an aluminium brazing clad layer (also known as an aluminium cladding layer). The aluminium brazing clad layer is made of a 4xxx-series alloy comprising silicon at its main alloying constituent in an amount in the range of 4%-20%. The aluminium brazing clad layer may be coupled or bonded to the aluminium core alloy in various ways known in the art, for example by means of roll bonding, cladding spray-forming or semi-continuous or continuous casting processes.

These aluminium brazing clad layers have a liquidus temperature typically in the range of about 540°C to 615°C.

Patent document EP-3026134-A1 discloses a heat exchanger, in particular for motor vehicles, with at least one exchanger tube made of an aluminium alloy and with at least one component connected in fluid communication to the exchanger tube, wherein the exchanger tube and the component are connected to one another by way of a common brazed connection, wherein the component connected to the exchanger tube has a core layer of an aluminium alloy with the following composition, in wt.: Si: max. 0.7%, Fe: max. 0.7%, Cu: max. 0.10%, Mn: 0.9-1.5%, Mg: max. 0.30%, Cr: max. 0.25%, Zn: max. 0.50%, Ti: max. 0.25%, Zr: max. 0.25%, unavoidable impurities individually max. 0.05%, in total max. 0.15%, remainder aluminium.

Patent document WO-02/070189-A1 discloses an aluminium alloy brazing sheet material, particularly suitable for charge-air-cooler applications, comprising a core alloy and a clad brazing alloy, wherein the core alloy of said material comprises (in wt.%): Si<0.2, Fe<0.2, Mn 1.3-1.7, Mg 0.4-0.8, Cu 0.3-0.7, Ti<0.2, and at least one element from the group consisting of Cr (0.05-0.20%), Sc (0.05-0.20%), V (0.05-0.20%), Zr (0.05-0.20%), Hf (0.05-0.20%), Ni (0.05-0.20%), balance aluminium and unavoidable impurities.

### DESCRIPTION OF THE INVENTION

As will be appreciated herein below, except as otherwise indicated, aluminium alloy designations and temper designations refer to the Aluminium Association designations in Aluminium Standards and Data and the Registration Records, as published by the Aluminium Association in 2019, and frequently updated, and are well known to the person skilled in the art. The temper designations are laid down in European standard EN515.

For any description of alloy compositions or preferred alloy compositions, all references to percentages are by weight percent unless otherwise indicated.

The term "up to" and "up to about", as employed herein, explicitly includes, but is not limited to, the possibility of zero weight-percent of the particular alloying element to which it refers. For example, up to about 0.25% Zr may include an aluminium alloy having no Zr.

There is a need for an aluminium alloy sheet material having an increased post-braze strength in combination with a good formability and good corrosion resistance.

It is an object of the invention to provide an aluminium alloy sheet material that achieves this need.

It is another object of the invention to provide a brazed heat exchanger incorporating such an aluminium alloy sheet material.

These and other objects and further advantages are met or exceeded by the present invention providing an aluminium alloy sheet material for use in a heat exchanger, preferably of a motor vehicle or as a HVAC&R component, having a composition, in wt.%, comprising of:

| | |
|---|---|
| Mn | 1.4% - 1.8%, preferably 1.50% - 1.8%; |
| Si | up to 0.7%, preferably up to 0.45%; |
| Fe | up to 0.7%, preferably up to 0.5%; |
| Mg | up to 0.30%, preferably up to 0.20%; |
| Cu | up to 0.10%, preferably up to 0.07%; |
| Cr | up to 0.25%, preferably up to 0.20%; |
| Zr | up to 0.25%, preferably up to 0.20%; |
| Zn | up to 0.50%, preferably up to 0.30%; |
| Ti | up to 0.2%, preferably up to 0.1%; |

balance aluminium and inevitable impurities. Typically inevitable impurities are each up to 0.05% maximum and in total 0.15% maximum.

The aluminium alloy sheet material according to this invention is ideally suitable for being used in a brazed heat exchanger, preferably of a motor vehicle or as a HVAC&R component, and provides a high post-braze yield strength in combination with a good formability and good corrosion resistance. The aluminium alloy sheet material offers a post-braze yield strength of more than 40 MPa and in the best examples of more than 45 MPa or even more than 50 MPa. The post-braze tensile strength is more than 115 MPa, and typically more than 120 MPa. The aluminium alloy sheet material prevents also detrimental galvanic coupling on the header or manifold tube's surface with for example MPE tubes or folded tubes and assembly features coupled to the manifold (e.g. fluid lines made from for example 6XXX-series extruded blocks).

Manganese is the main alloy constituent of this aluminium alloy and contributes to the increase in strength and to provide the corrosion resistance. The Mn content of the aluminium alloy is thus at least 1.4%, preferably at least 1.50% and more preferably at least 1.55%. A too high Mn content in the final product results in a relative high amount of Mn in solid solution making the aluminium alloy as core alloy more noble and therefore should not exceed 1.8%, and preferably is maximum 1.75%. A too high Mn content increases also the risk of forming large intermetallic phases.

An aluminium alloy with a high amount of Mn can be produced by means of Direct-Chill (DC-) casting under control of the casting conditions to avoid the formation of large intermetallic phases. Such intermetallics may tie up considerable amounts of the alloying elements Mn, Cr, Zr, Ti, rending a lower percentage available to contribute to the required engineering properties. In particular large intermetallics have an adverse effect on formability, and they may hinder further down gauging of the product form, and they can have an adverse effect on the corrosion resistance. The aluminium alloy can favourably be manufactured using casting techniques having a relatively high cooling rate during the casting process such as with regular continuous casting techniques (e.g., slab casting, twin roll casting, belt casting, drag casting, etc.). High solidification rates during casting are also desirable because they allow for the introduction of higher volume-fractions of fine dispersoids into the alloy. As such, thin ingots are more desirable than thicker ingots for DC-casting of the aluminium alloy. Continuous casting is further preferred in view of the higher solidification rates attained.

Silicon together with manganese forms precipitation phases of the so-called alpha-phase (Al₁₅Mn₄Si₂) in the course of the production process. This reduces the content of manganese being in solution in the matrix and thus influences the corrosion potential in the desired direction and also increases the mechanical strength through precipitation hardening. Excessively high contents would excessively reduce the melting point of the alloy. The Si content of the aluminium alloy is thus up to 0.7% and preferably up to about 0.45%, and more preferably up to about 0.3%. As Si in solid solution increases the corrosion potential and in order to simultaneously achieve a desired corrosion potential, the Si content of the aluminium alloy is preferably about 0.1%-0.7%. A preferred range for the Si content is about 0.1%-0.45%, and more preferably in the range of about 0.1%-0.3%. A relative low Si content is further preferred as it supports the formation of a so-called brown band, which limits corrosion going through the thickness of the aluminium sheet. As the aluminium alloy has a very low Cu content there is no Cu depletion zone after brazing, the brown band formation provides increased corrosion resistance to the aluminium alloy sheet.

High iron contents negatively affect the corrosion behaviour and also bind silicon in the form of intermetallic phases so that the effect of the bond formation between silicon and manganese, as previously described for silicon, is limited. The Fe content of the aluminium alloy is thus limited to up to 0.7%, and more preferably up to about 0.5%. In an embodiment the Fe-content is in a range of about 0.1% to 0.4% and provides a good compromise for good corrosion behaviour and economic efficiency.

Copper pushes the corrosion potential of the alloy strongly into a positive and thus in an undesirable direction. The Cu content of the aluminium alloy is thus limited to unavoidable traces of up to about 0.10%, and preferably up to about 0.07%, as copper can also diffuse from the core layer material to the region of brazed connections, in particular fillet welds, and adversely affect the corrosion performance in this region. In an embodiment, to balance the strength benefit of copper and its effect on the corrosion potential a preferred Cu-content is in a range of about 0.02%-0.07%, and more preferably 0.03% to 0.07%.

Magnesium increases the strength by solid solution hardening and pushes the corrosion potential into a base, i.e. into the desired direction. However, higher Mg contents negatively affect the brazing behaviour in the normal CAB brazing process (controlled atmosphere brazing). The Mg content of the aluminium alloy is thus limited to up to about 0.30%, preferably to up to about 0.20%. It has, on the other hand, been found that the strength and the corrosion potential of the aluminium alloy sheet can very effectively already be set by a targeted addition of a low quantity of Mg in the range of 0.01%-0.25%, in particular in the range of 0.02%-0.20%, with limited adverse effect in the brazing behaviour.

Chromium increases the post-braze strength and in the aluminium alloy compensates at least partly the intentional dispensation of copper. However, since undesired coarse intermetallic casting phases can precipitate with higher Cr contents, the Cr content in the aluminium alloy is limited to up to about 0.25%, and preferably to up to about 0.20%.

By controlling the grain size, zirconium increases the post-braze strength of the aluminium alloy. However, since undesired coarse intermetallic phases may form during casting with higher Zr-contents, the Zr-content in the aluminium alloy is limited to up to about 0.25%, and preferably to up to about 0.20%.

In an embodiment there is a combined addition of Cr+Zr in the range of about 0.08% to 0.25%, preferably of 0.08% to 0.20%, and wherein Zr and Cr are each present at a minimum of 0.03%. In this embodiment combined addition provides amongst others an increased post-braze strength.

The Zn content of the alloy is limited to up to about 0.50%, and preferably to up to about 0.30%. Since zinc strongly pushes the corrosion potential into a base direction, it can however be added in small quantities as required for fine adjustment of the corrosion potential, in particular in a range of 0.01%-0.25%, and preferably in a range of 0.06%-0.25%.

Ti may be present up to about 0.20%, and preferably up to about 0.10%, to act as a grain refining additive during the casting of the rolling feedstock for manufacturing the aluminium alloy sheet material of the invention. Grain refiners such as those containing titanium and boron, or titanium and carbon, can be used as is well-known in the art.

In an embodiment of the invention the aluminium alloy sheet material for use in a heat exchanger, preferably of a motor vehicle, has a composition, in wt.%, consisting of: Mn 1.4-1.8%; Si up to 0.7%; Fe up to 0.7%; Mg up to 0.30%; Cu up to 0.10%; Cr up to 0.25%; Zr up to 0.25%; Zn up to 0.50%; Ti up to 0.2%; balance aluminium and inevitable impurities, and with preferred narrower ranges as herein described and claimed.

In an embodiment of the invention the aluminium alloy is incorporated in a brazing sheet product comprising of a core alloy made from the aluminium alloy according to this invention and clad on one or both sides with a filler or brazing material layer, preferably of a 4xxx-series aluminium brazing alloy and typically having Si in a range of 5% to 14% as its main alloying constituent. Typical filler alloys within this series are AA4343, AA4045, AA4047, AA4004, AA4104, AA4147, or some near compositional variants thereof. The brazing material layer can be applied to the aluminium alloy core alloy via various techniques known in the art and known to the skilled person. For example, by means of roll bonding as is well known and most practised in the art. Alternatively the core alloy and brazing material layer can be manufactured simultaneously by means of co-casting techniques.

In another embodiment there is provided an outerliner or waterside liner bonded on one side of the core alloy made from the aluminium alloy according to this invention and a clad brazing material bonded to the other side of the core alloy. The outerliner would generally be of an alloy tailored to provide high corrosion resistance or even corrosion combined with erosion resistance in the environment to which that face of the sheet is exposed, e.g. the inside of a manifold tube or header being exposed to the coolant of a heat exchanger. An example of a suitable outerliner would be an aluminium alloy having a purposive addition of Zn up to about 4%, such as for example an AA7072-series alloy. Also an alloy can be used having a purposive addition of Mg to increase the strength of the outerliner such that the outerliner may contribute to the overall post-braze strength of the brazing sheet product. Also a combined addition of Zn and Mg would be a good consideration.

The thickness of the core layer (in percent compared to the total thickness of a brazing sheet product) is preferably in a range of about 60% to 96%, the thickness of the outerliner or waterside liner (in percent compared to the total thickness of the brazing sheet) is preferably in a range of about 5% to 25% and the thickness of the filler or brazing material layer is preferably (in percent compared to the total thickness of the brazing sheet) in a range of about 4% to 20%, preferably of about 4% to 12%. The thickness of the core alloy at final clad composite thickness can be as little as about 70 microns to as much as about 4 mm, and is preferably in a range of 0.9 to 1.5 mm.

In an aspect of the invention it relates to the use of the aluminium alloy sheet material as herein described and claimed for manufacturing of in particular a header or manifold tube as one of the components of a brazed heat exchanger. The aluminium alloy sheet material can be used also as condenser and evaporator manifold tube, including for integrated receiver dryer tube. And also for associated products like side supports, tube dividers, tubes in-fill, caps, baffles, flow conditioners, spacers, and bracketry.

In another aspect of the invention there is provided a brazed heat exchanger, preferably of a motor vehicle or HVAC&R component, comprising at least one component made from the aluminium alloy sheet material according to this invention. HVAC&R is a known abbreviation for Heating, Ventilation, Air Conditioning & Refrigeration and relates to heat exchangers in a domestic or industrial environment.

The brazed heat exchanger typically comprises at least one header structured to hold a coolant; said header including a plurality of apertures; in operation, a plurality of substantially parallel fluid-carrying tubes (which can be made from sheet folded to a sheet or from extruded material, e.g. multi-port extrusions; a typical aluminium alloy is of the 3XXX-series or 6XXX-series) each extending substantially perpendicular from one of said plurality of apertures in said header and structured to receive said coolant therethrough; and a plurality of corrugated aluminium alloy fins, the aluminium alloy fins may act as a sacrificial anode, and said aluminium alloy fins being in thermal communication with said plurality of fluid-carrying tubes and structured to transfer heat away therefrom, in order to cool said coolant as it circulates therein; and wherein said header being made from the aluminium alloy sheet material as herein disclosed and claimed. The fluid-carrying tubes are directly connected to the header via a brazed joint such that these components form a direct galvanically coupled corrosion system. A header with a lower or more balanced corrosion potential than the fluid-carrying tubes is consequently well suited to anodically protect the fluid-carrying tubes.

In an aspect of the invention it relates to a method of manufacturing the Al-Mn alloy sheet material as described herein and claimed and being suitable for use in a heat exchanger, in particular for a motor vehicle or as a HVAC&R component. The method comprising the following steps: casting of rolling feedstock with the following composition, in wt.%, comprising of: Mn 1.4-1.8%; Si up to 0.7%; Fe up to 0.7%; Mg up to 0.30%; Cu up to 0.10%; Cr up to 0.25%; Zr up to 0.25%; Zn up to 0.50%; Ti up to 0.2%; balance aluminium and inevitable impurities, and with preferred narrower ranges as herein described and claimed; for example by means of DC-casting or continuous strip casting, and thereafter preferably homogenized prior to being down gauged by means of rolling to final gauge, for example by hot rolling and optionally also by cold rolling; homogenising the rolling ingot, in particular for the DC-cast rolling feedstock, is by means of an annealing treatment at a temperature in the range of 530°C to 620°C, preferably in the range of 540°C and 610°C, and a soaking time at the target temperature in the range of 2 and 25 hours, preferably 4 to 16 hours, to eliminate or reduce segregation by diffusion and for form fine grains after recrystallization and enhance formability after recrystallization; hot rolling the rolling ingot, in particular for the DC-cast rolling ingot, to form a hot rolled strip, in particular to a hot rolled strip thickness in the range of 2.0 to 10 mm, preferably in the range of 3 to 8 mm; cold rolling the hot rolled strip or the continuous cast strip to a final thickness with optional intermediate annealing at a temperature in the range of 300°C to 450°C, preferably in the range of 300°C to 400°C, with the final thickness of the cold rolled strip preferably in the range of 0.07 to 5 mm, particularly preferably in the range of 0.8 to 3 mm, more preferably in the range of 0.8 to 2.5 mm.

According to an alternative embodiment of the invention, the previously described method can also be carried out without homogenising the rolling ingot, in particular for the DC-cast ingot, to provide a higher post-braze strength.

It has been determined that this production method in combination with the previously described alloy leads to an aluminium alloy sheet whose core layer has good post-braze strength and simultaneously a low corrosion potential balanced to the fluid-carrying tubes.

If a state hard as-rolled, e.g. H12 or H14 (DIN EN 515), is required in the final state, a recrystallising annealing of the cold strip is preferably carried out at an intermediate thickness at temperatures of between 300°C and 450°C, preferably between 300°C and 400°C. The intermediate thickness depends on the required final thickness, the mechanical strength of the material can be set via the precise final rolling reduction degree. For a state of H14, e.g., a final rolling reduction degree in the range of 25% to 30%, for example of 30%, is reasonable in order to achieve a favourable combination of strength in the delivered state and formability. The final rolling reduction degree in contrast typically has only little or no influence on the corrosion potential in the brazed state.

For a material in the soft-annealed state "O" (DIN EN 515), soft annealing preferably takes place at final thickness at a temperature of between 300°C and 450°C, more preferably between 300°C and 400°C. The method for a material in the soft-annealed state is also preferably carried out with homogenisation of the DC-cast rolling ingot. Alternatively, a state H24 (DIN EN 515) can be set by final annealing at temperatures of between 240°C and 350°C. If high requirements are placed on the formability of the aluminium strip, in particular for the production of a component of the heat exchanger of the aluminium alloy strip, then an O-temper is preferably set during the production process of the aluminium strip. For the use of the aluminium strip for the production of tubes, as a component of the heat exchanger or HVAC&R component, a state H24 or H14 or H12 is preferably set during the production process. Such a state of the aluminium strip in particular facilitates the punching of slots for the connection of the heat exchanger tubes. It has been found that a concluding heat treatment such as final or soft annealing has no significant influence on the corrosion potential after brazing.

In a preferred embodiment the aluminium sheet material is provided in an O-temper or H22 temper.

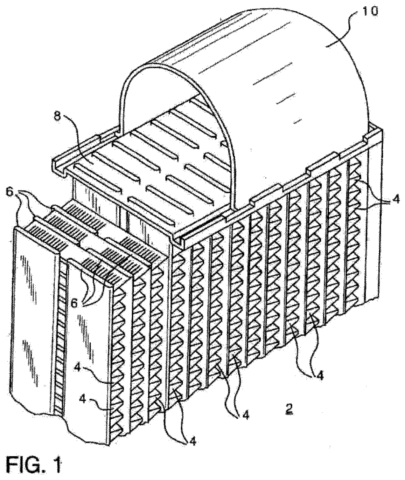

Fig. 1 is an isometric view of a portion of a brazed heat exchanger.

As shown in Fig. 1, a brazed aluminium heat exchanger 2 in accordance with the present invention includes a plurality of fluid-carrying tubes 6. The ends of the fluid-carrying tubes 6 are open to a header 10. In this configuration the header comprises also a header plate 8 including a plurality of apertures (one end of the fluid-carrying tubes 6, one header 10 with one header plate 8 are shown in Fig.1). Coolant is circulated from the header 10, through the fluid-carrying tubes 6 and into another header (not shown). As shown, a plurality of cooling fins 4 are disposed between (in operation) the fluid-carrying tubes 6, in order to transfer heat away therefrom thereby facilitating a heat exchange cooling of the fluid therein. The cooling fins 4 are joined to the fluid-carrying tubes 6 by means of brazing and the fluid-carrying tubes 6 are joined to the header plate 8 by brazing also. Brazing includes all known techniques in the field of heat exchanger manufacture, and includes controlled atmosphere brazing, vacuum atmosphere brazing and flame brazing operations.

While various embodiments of the technology described herein have been described in detail, it is apparent that modifications and adaptations of those embodiments will occur to those skilled in the art. However, it is to be expressly understood that such modifications and adaptations are within the spirit and scope of the presently disclosed technology.

## Claims

1. Aluminium alloy sheet material for use in a heat exchanger, preferably of a motor vehicle or HVAC&R component, having a composition, in wt.%, comprising of:
| | |
|---|---|
| Mn | 1.4% - 1.8%, preferably 1.50% - 1.8%, |
| Si | up to 0.7%, preferably up to 0.45%, |
| Fe | up to 0.7%, preferably up to 0.5%, |
| Mg | up to 0.30%, preferably up to 0.20%, |
| Cu | up to 0.10%, preferably up to 0.07%, |
| Cr | up to 0.25%, |
| Zr | up to 0.25%, |
| Zn | up to 0.50%, |
| Ti | up to 0.2%, |
balance aluminium and inevitable impurities.

2. Aluminium alloy sheet material comprising of an aluminium alloy core layer made from the aluminium alloy defined in claim 1 and provided on one or both faces with an aluminium brazing layer, in particular a 4XXX-series aluminium alloy brazing layer.

3. Aluminium alloy sheet material according to claim 1 or 2, wherein the aluminium alloy sheet material is provided in an O-temper or H22-temper.

4. A brazed heat exchanger, preferably of a motor vehicle or as a HVAC&R component, comprising at least one header structured to hold a coolant; said header including a plurality of apertures; a plurality of substantially parallel fluid-carrying tubes each extending substantially perpendicular from one of said plurality of apertures in said header plate and structured to receive said coolant therethrough; and a plurality of corrugated aluminium alloy fins being in thermal communication with said plurality of fluid-carrying tubes and structured to transfer heat away therefrom, in order to cool said coolant as it circulates therein, and wherein said header is being made from the aluminium alloy sheet material according to any one of claims 1 to 3.

5. A brazed heat exchanger according to claim 4, wherein the header is made from an aluminium alloy sheet material having 1.50%-1.8% Mn, and preferably 1.55%-1.8%.

6. A brazed heat exchanger according to claim 4 or 5, wherein the header is made from an aluminium alloy sheet material having 0.10%-0.45% Si, and preferably 0.10%-0.3%.

7. A brazed heat exchanger according to any one of claims 4 to 6, wherein the header is made from an aluminium alloy sheet material having 0.1%-0.4% Fe.

8. A brazed heat exchanger according to any one of claims 4 to 7, wherein the header is made from an aluminium alloy sheet material having up to 0.07% Cu, and preferably 0.02%-0.07% Cu.

9. A brazed heat exchanger according to any one of claims 4 to 8, wherein the header is made from an aluminium alloy sheet material having 0.01%-0.25% Mg, preferably 0.02%-0.20% Mg.

10. A brazed heat exchanger according to any one of claims 4 to 9, wherein the header is made from an aluminium alloy sheet material having a combined addition of Cr and Zr in a range of 0.08%-0.25%, and preferably each of Cr and Zr having a minimum of 0.03%.

11. A brazed heat exchanger according to any one of claims 4 to 10, wherein the header is made from an aluminium alloy sheet material having up to 0.25% Zn, and preferably 0.06%-0.25% Zn.

12. A brazed heat exchanger according to any one of claims 4 to 11, wherein the header has an outside surface and an inside surface in contact with the coolant and wherein on the inside surface the aluminium alloy sheet material is provided with a waterside liner.

13. Use of an aluminium alloy sheet material according to any one of claims 1 to 3 for manufacturing of a header of a brazed heat exchanger, in particular of a brazed heat exchanger according to any one of claims 4 to 12.
